# FASCICULE DE BREVET EUROPEEN

(11) **EP 0 796 458 B1**
(45) Date de publication et mention de la délivrance du brevet: **22.07.1998**
(21) Numéro de dépôt: 95942231.2
(22) Date de dépôt: 07.12.1995
(51) Int. Cl.: G05B 19/404, B23Q 17/22

(54) **SYSTEME DE MESURE DE DEPLACEMENTS D'UN CHARIOT DE MACHINE-OUTIL**
SYSTEM ZUM MESSEN VON VERSCHIEBUNGEN EINES WERKZEUGMACHINENSCHLITTENS
SYSTEM FOR MEASURING THE MOVEMENT OF A MACHINE TOOL CARRIAGE

(30) Priorité: 09.12.1994 FR 9414849
(43) Date de publication de la demande: 24.09.1997
(73) Titulaire: COMMISSARIAT A L'ENERGIE ATOMIQUE, 75015 Paris (FR)
(72) Inventeur: DEMESY, Michel, F-21121 Fontaine-les-Dijon (FR); VACHETTE, Jean-Marie, F-60100 Creil (FR)
(74) Mandataire: Ilgart, Jean-Christophe
(86) Numéro de dépôt international: FR9501630
(87) Numéro de publication internationale: WO9618137

(56) Documents cités:
- EP-A- 0 584 598
- FR-A- 2 146 043
- ADVANCES IN INSTRUMENTATION, vol. 42, no. 2, 1987 RESEARCH TRIANGLE PARK US, pages 635-642, HAOFAN WAN E.A. 'STRAIGHTNESS OF MACHINE TOOLS AND MACHINED WORK'
- PATENT ABSTRACTS OF JAPAN vol. 12 no. 18 (M-660) ,20 Janvier 1988 & JP,A,62 176739 (HITACHI SEIKI CO LTD) 3 Août 1987,

## Description

L'invention a trait à un système de mesure de déplacements d'un chariot de machine-outil qui permet de guider le chariot avec une très grande précision.

Les mesures classiques pour renforcer la précision des déplacements des machines-outils incluent des améliorations technologiques dans les glissières, les paliers, etc. afin d'améliorer les ajustements et de réduire les jeux et les déformations dans les machines, mais on se heurte à des limitations des effets obtenus même si on recourt à des moyens très coûteux, de sorte qu'il est impossible d'obtenir une précision de position meilleure que quelque microns environ entre l'outil d'usinage et la pièce usinée portés par le chariot et une partie fixe de la machine, dans chacune des directions principales de la machine, par rapport à une position demandée.

**'ADVANCES IN INSTRUMENTATION', vol. 42, no. 2, 1987 RESEARCH TRIANGLE PARK US, pages 635-642, Haofan Wan E. A. et autres: 'Straightness of machine tools and machined work'** décrit une procédure pour la mesure en temps réel de la droiture d'une machine-outil en utilisant le principe de la séparation des erreurs de trois points (three-point error-separating technique). **FR-A-2146043** décrit un tour comportant des mécanismes de réglage de précision permettant une mise en place exacte de la broche à la fois dans le plan horizontal et dans le plan vertical.

L'invention provient d'une conception différente où on ne cherche pas à faire coïncider les déplacements réels du chariot avec ses déplacements nominaux demandés par l'utilisateur : elle a pour objet un système de mesure grâce auquel les déplacements du chariot sont mesurés avec une grande précision. Il suffit alors de les communiquer au système de pilotage de la machine pour corriger les déplacements nominaux instantanément. L'invention est donc plutôt réservée aux machines à commande numérique, sans cependant être absolument exclue pour les autres, et on peut l'appliquer à un certain nombre d'opérations d'usinage, comme il sera évident quand on aura lu toute cette description. La précision obtenue est d'environ un micron dans les directions principales du chariot.

Le système de mesure de déplacements d'un chariot de machine-outil mobile sur un bâti et dans un plan incluant une direction d'avance du chariot et un axe de chariot tel qu'un axe de rotation de broche porte-pièce comprend une piste parallèle à la direction d'avance et un ensemble de deux capteurs de distance de la piste selon une direction appartenant au plan et perpendiculaire ou éventuellement oblique à la direction d'avance, les capteurs étant échelonnés dans la direction d'avance, ainsi qu'une règle graduée située dans le plan et parallèle à la direction d'avance, et enfin un capteur optique observant une portion de la règle ; la piste est liée au bâti et l'ensemble des deux capteurs au chariot ou vice-versa ; et la règle est liée au bâti et le capteur optique au chariot ou vice-versa.

On va maintenant décrire l'invention plus en détail à l'aide des figures dont :
- la figure 1 illustre le système de l'invention, le chariot étant vu de face ;

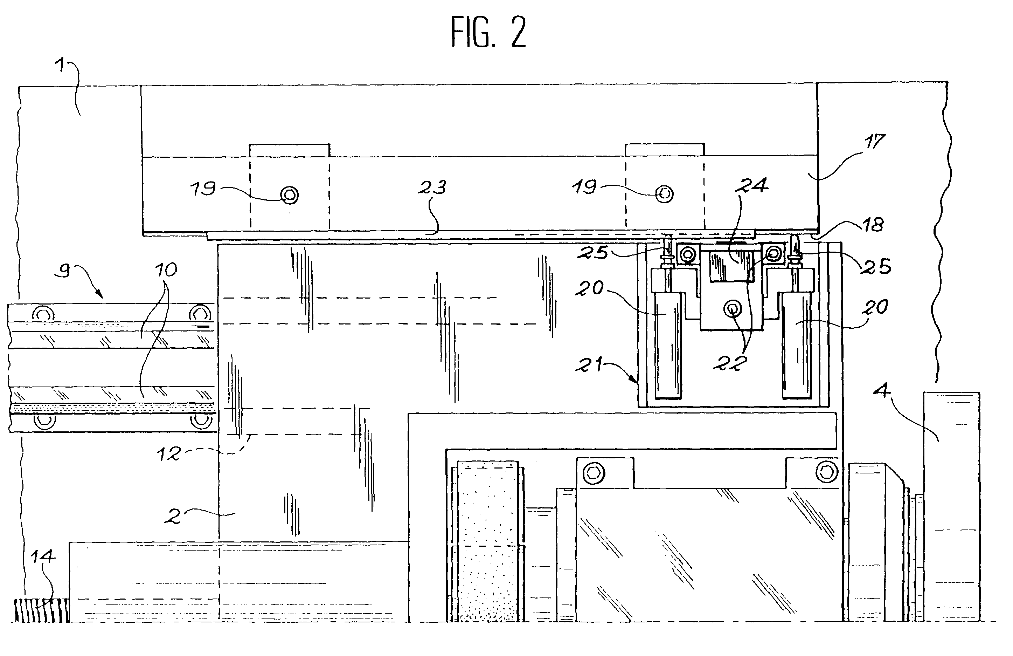

- et la figure 2 illustre les mêmes éléments en vue de dessus du chariot.

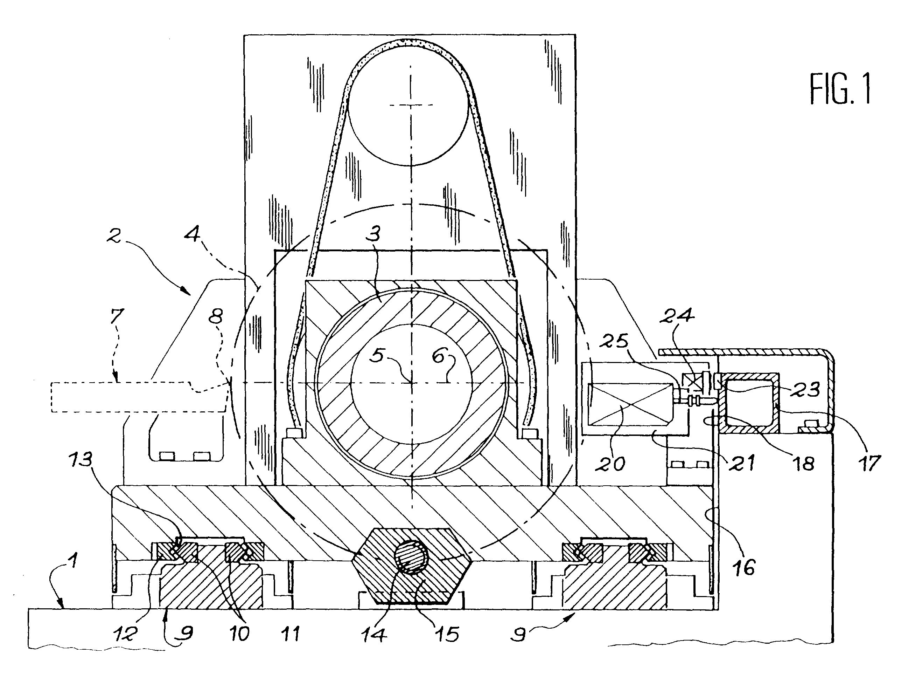

La machine-outil envisagée ici est un tour dont on a représenté partiellement un bâti 1 et un chariot 2 mobile sur le bâti 1 et porteur d'une broche 3 rotative portant elle-même une pièce tournée 4 dont on a esquissé le contour. L'axe de la broche 3 porte la référence 5, et on a référencé par 6 le plan passant par cet axe 5 et parallèle aux déplacements du chariot 2. Il s'agit d'un plan horizontal ici, qui est vu en coupe sur la figure 1. Les directions d'avance du chariot 2 et de l'axe 5 sont confondues. Un outil 7, simplement esquissé et lié rigidement à une poupée fixe de tour non représentée assujettie au bâti 1, possède une arête de coupe 8 incluse dans le plan 6.

Des moyens classiques sont utilisés pour mouvoir le chariot sur le bâti 1. Il s'agit de deux glissières 9 parallèles et qui comprennent en particulier chacune deux rails fixes 10 à section saillante et terminée en triangle 11, les triangles 11 pointant dans des directions latérales opposées. Des rails mobiles 12 creux et fixés au chariot 2 encadrent les rails fixes 10, dont les triangles s'engagent dans les creux. Des patins 13 disposés entre les creux et les saillies des rails 10 et 12 absorbent les jeux qui les séparent et assurent le roulement.

Le mouvement du chariot 2 est provoqué par une vis sans fin 14 à mi-distance des glissières 9 et située comme elles sous l'axe 5. Elle engrène avec un écrou 15.

Passons maintenant aux équipements spécifiques de l'invention. Le chariot 2 longe pendant ses déplacements une paroi latérale 16 du bâti 1, qui porte une barre 17 rectiligne et dont une face latérale a été rectifiée avec soin pour offrir une surface parfaitement lisse constituant une piste 18 orientée vers le chariot 2. Des vis 19 assurent la liaison de la barre 17 au bâti 1 et permettent de régler avec le plus grand soin la position de la piste 18. Si on ne parvient pas à placer la piste 18 parfaitement dans la direction d'avance, il est cependant possible de vérifier la position d'un certain nombre de ses points par des moyens de calibration connus et d'introduire ces positions dans le système de calcul et de commande. On peut ainsi tenir compte de l'erreur d'alignement de la piste 18 et aussi de son défaut de rectitude éventuel.

La piste 18 est donc immobilisée à une position connue. Elle est palpée à tout moment par les tiges mobiles 25 de deux capteurs 20 de type inductif, orientés perpendiculairement à la direction d'avance du chariot 2 mais toutefois dans le plan 6, et dont les boîtiers sont assujettis à un support 21. Des vis 22 unissent le support 21 au chariot 2 avec ici encore une possibilité de réglage de position angulaire pour placer les capteurs 20 à la même distance de la piste 18.

La piste 18 est ornée d'une règle graduée 23, et le support 21 porte aussi un capteur optique 24 situé devant une portion de la règle graduée 23. Il compte les graduations qu'il parcourt quand le chariot 2 est déplacé et fournit ainsi les déplacements de celui-ci selon l'axe 5 avec une excellente précision, ce qui permet de corriger les imprécisions de la commande par la vis sans fin 14.

Les capteurs de distances 20 évaluent indépendamment la distance de la piste 18 et fournissent donc une évaluation de la position latérale du chariot 2 et de sa déviation angulaire ou déviation de lacet dans le plan 6. Il est alors facile de calculer la position latérale du chariot pour chacune de ses sections et en particulier à côté de l'outil 7.

Il est utile que la règle graduée 23 soit au niveau du plan 6. Sinon, un basculement même faible du chariot 2 dans un plan vertical de tangage donnerait une estimation incorrecte de sa position dans la direction de l'axe 5, ce qu'on appelle une erreur d'Abbé, car le capteur optique 24 et les points du plan 6 subiraient des déplacements différents dans la direction d'avance.

Dans cette application, on s'est prémuni contre les incertitudes de position qui auraient l'influence la plus grande sur les cotes finales de la pièce tournée 4. On n'a donc pas prévu de dispositif de mesure de la position verticale du chariot 2, perpendiculairement au plan 6, car on voit bien que les erreurs dans cette direction ne se traduisent que par une variation de hauteur de l'arête de coupe 8 et n'ont presque pas d'influence sur l'usinage de la pièce 4. On pourrait cependant ajouter un dispositif à deux capteurs décalés longitudinalement, semblables aux capteurs 20 mais orientés verticalement, pour évaluer ces erreurs en frottant sur une piste semblable à la piste 18.

Les capteurs 20 et 24 sont donc reliés au système de commande non représenté de la machine-outil et lui permettent de corriger les valeurs préalablement introduites par l'utilisateur pour déplacer la pièce 4 par rapport à l'outil 7 en directions d'avance et de profondeur de passe. On garantit donc une exécution beaucoup plus précise des cotes d'usinage de la pièce 4. Une précision à un micron près peut par exemple être atteinte : il existe des capteurs 20 qui ont une précision de mesure à un dixième de micron, et la piste 18 peut être aplanie par rodage en ne laissant subsister que des reliefs d'un demi-micron de hauteur ; la calibration de sa position et de celle de l'outil introduit quelques incertitudes supplémentaires mais qui sont faibles elles aussi, -ce qui permet d'atteindre l'incertitude totale mentionnée ci-dessus.

## Revendications

1. Système de mesure de déplacements d'un chariot (2) de machine-outil mobile sur un bâti (1) et dans un plan (6) incluant une direction d'avance (5) du chariot (2) et un axe (5) de chariot tel qu'un axe de rotation de broche (3) porte-pièce (4), comprenant une règle graduée (23) située dans le plan (6) et parallèle à la direction d'avance, et un capteur optique (24) observant une portion de la règle, l'un de la règle et du capteur optique étant lié au bâti et l'autre au chariot, caractérisé en ce qu'il comprend une piste (18) parallèle à la direction d'avance et un ensemble de deux capteurs (20) de distance de la piste selon une direction appartenant au plan et perpendiculaire ou éventuellement oblique à la direction d'avance, les capteurs étant échelonnés dans la direction d'avance, l'un de la piste et de l'ensemble des deux capteurs étant lié au bâti (1) et l'autre au chariot (2).

2. Système de mesure suivant la revendication 1, caractérisé en ce que la machine-outil est un tour, l'axe (5) est un axe de rotation d'une pièce (4) à tourner et un outil de tournage (7) immobile a une arête de coupe (8) située dans le plan.

## Claims

1. System for measuring the movement of a machine-tool carriage (2) that can move on a bed (1) and in a plane (6) including a direction (5) in which the carriage (2) advances and a carriage axis (5) such as an axis of rotation of the spindle (3) of the workpiece (4), comprising a graduated rule (23) lying in the plane (6) and parallel to the direction of advance, and an optical sensor (24) observing a portion of the rule, either the rule or the optical sensor being connected to the bed and the other one being connected to the carriage, characterized in that it comprises a track (18) parallel to the direction of advance and a set of two sensors (20) that sense the distance to the track in a direction which is in the plane and perpendicular or possibly at an angle to the direction of advancement, the sensors being staggered in the direction of advance, either the track or the set of two sensors being connected to the bed (1), and the other to the carriage (2).

2. Measuring system according to Claim 1, characterized in that the machine tool is a lathe, the axis (5) is the axis of rotation of a workpiece (4) to be turned and a stationary turning tool (7) has a cutting edge (8) situated in the plane.

## Patentansprüche

1. System zum Messen von Verschiebungen eines Werkzeugmaschinenschlittens (2), der auf einem Maschinenrahmen (1) in einer Ebene (6) beweglich ist, die eine Vorschubrichtung (5) des Schlittens (2) und eine Schlitten- bzw. Supportachse (5) wie z.B. eine Rotationsachse der Werkstückträger-Spindel (4-3) einschließt, einen Strichmaßstab (23), der sich parallel zur Vorschubrichtung in der Ebene (6) befindet, und einen optischen Sensor (24) umfassend, der einen Teil des Maßstabs beobachtet, wobei eines von beiden, der Maßstab oder der optische Sensor, am Maschinenrahmen befestigt ist und das andere am Schlitten,
**dadurch gekennzeichnet**,
daß es eine zu der Vorschubrichtung parallele Bahn bzw. Spur (18) und eine Einheit aus zwei Sensoren (20) des Abstands der Spur in einer in der Ebene enthaltenen und zu der Vorschubrichtung senkrechten oder eventuell schrägen Richtung umfaßt, wobei die Sensoren in Vorschubrichtung gestaffelt sind und eines von beiden, die Spur oder die Sensoren-Einheit, am Maschinenrahmen (1) befestigt ist und das andere am Schlitten (2).

2. Meßsystem nach Anspruch 1, dadurch gekennzeichnet, daß die Werkzeugmaschine eine Drehmaschine ist, wobei die Achse (5) eine Rotationsachse eines zu drehenden Werkstücks ist und ein Drehwerkzeug (7) eine in dieser Ebene befindliche Schneidkante (8) aufweist.
